# EUROPEAN PATENT APPLICATION

(11) **EP 1 720 174 A1**
(43) Date of publication of application: **08.11.2006**
(21) Application number: 05709725.5
(22) Date of filing: 04.02.2005
(51) Int. Cl.: H01B 5/00, C01G 19/02, C09D 5/24, C09D 7/12, C09D 201/00, H01B 13/00

(54) **ELECTROCONDUCTIVE TIN OXIDE POWDER AND METHOD FOR PRODUCTION THEREOF**

(30) Priority: 06.02.2004 JP 2004030989
(71) Applicant: MITSUI MINING & SMELTING CO., LTD., Tokyo 141-8584 (JP)
(72) Inventor: FUJII, Hiroshi; c/o Hikoshima Smelting Co., Ltd., 1-chome, Hikoshima, Shimonoseki (JP); KAWARAYA, Koichi; c/o Hikoshima Smelting Co., Ltd., 1-chome, Hikoshima, Shimonoseki-shi (JP); YOSHIMARU, Katsuhiko; c/o Hikoshima Smelting Co.,, acho 1-chome, Hikoshima, Shimonoseki (JP); SHIMAMURA, Hiroyuki; c/o MITSUI MINING & SMELTING, ered Materials Sector 11-1, Osaki (JP)
(74) Representative: Bohmann, Armin K.
(86) International application number: PCT/JP2005/001659
(87) International publication number: WO 2005/076291

(57) **Abstract**

An obj ect of the present invention is to provide an electro conductive tin oxide powder which is free from toxic dopant, e.g., antimony, which can provide excellent conductivity to a polymer, and easy to disperse in a paint and the conductive film formed shows excellent transparency; and also provide the method for producing an electro conductive tin oxide powder. In order to achieve the above objects, the present invention disclose the electro conductive tin oxide powder which is **characterized in that** it is free from a dopant and the paint prepared with it gives conductive film which shows a Haze value of 5% or less and surface resistance of 10¹⁰ Ω/□ or less. The electro conductive tin oxide powder is produced by the method which is **characterized in that** steps for production are, adding a sodium stannate solution slowly into an aqueous acid solution till the solution pH goes down to 5 or under; followed by rinsing, followed by filtering and drying the resulting slurry and milling of the resulting dry powder and calcining of the milled powder in a non-oxidizing atmosphere.

## Description

### Technical Field

The present invention relates to an electro conductive tin oxide powder and a method for producing the same, more specifically an electro conductive tin oxide powder which is contained in a polymer for plastic products, paints or the like to provide them a good performance in electro conductivity and, at the same time, is highly dispersible in paints and transparent, and a method for producing the same.

### Background Art

Plastic products, paints or the like are often required to be electro conductive. For such a purpose, conductive powder is blended in the paint when prevention of charging with electricity and generation of electrostatic prevention are required on a film formed with paint. So it is well known to get conductive plastics and/or paint, it is popular to blend conductive powders into polymers.

Avariety of electro conductive powders for making plastic products, conductive paints or the like electro conductive are known. A metal powder, carbon black, a tin oxide powder doped with antimony or the like is one example.

Of these electro conductive powders, metal powders and carbon black are not desirable, because they blacken a polymer in which they are contained to limit its applicable areas. A tin oxide powder doped with antimony or the like, although having an advantage of making a polymer highly electro conductive, turns a polymer bluish black to limit its applicable areas, as is the case with carbon black or the like. Moreover, anticipated toxicity of antimony itself limits applicable areas of polymer.

On the other hand, Patent Document 1 discloses a superfine electro conductive tin dioxide powder, essentially consisting of tin dioxide, having an average particle size of 0.01 to 5 µm (D₅₀ in the size distribution), specific surface area of 5 to 100 m²/g and volumetric resistivity of 10⁻³ to 10⁴ Ω·cm, and free of dopant, e.g., antimony. It is claimed to be highly transparent and electro conductive.

Patent Document 2 (Japanese Patent Laid-Open No. 2002-29744) discloses a method for producing a tin oxide powder by the reaction in a pH range from pH0.5 to pH4 followed by calcination.

Patent Document 1: Japanese Patent Laid-Open No. 6-345429 Patent Document 2: Japanese Patent Laid-Open No. 2002-29744

### Disclosure of the Invention

### Problems to be solved by the Invention

The fine electro conductive tin dioxide powder disclosed by Patent Document 1 involves a problem of insufficient dispersibility in paints. In the above and following descriptions, "dispersibility" is a term for representing dispersibility of a powder in a conductive paint. Accordingly, when a powder is highly dispersible in a conductive paint, the powder has excellent dispersibility. When such conductive powder is blended in to a polymer to produce conductive paint, good transparency is required on a conductive film formed with the conductive paint.

The method disclosed in Patent Document 2 is that an aqueous tin salt solution reacts with an alkali solution to produce a tin oxide powder. The product also involves problems of insufficient dispersibility in paints and the transparency of a conductive film formed with the conductive paint, as is the case with the powder described earlier.

It is an object of the present invention to provide an electro conductive tin oxide powder free of toxic dopant, e. g. , antimony, capable of providing a conductive film by a polymer or the like with high electro conductivity when it is contained therein, and excellent in dispersibility in conductive paints and transparency of a conductive film. It is another object to provide a method for producing the electro conductive tin oxide powder.

### Means for Solving the Problems

The inventors of the present invention have found, after having extensively studied to solve the above problems, that the above objects are achievable by the electro conductive tin oxide powder having the characteristics described below, and, as a result, giving a coated film which shows Haze value and surface resistance at given levels or less, when the film is made of the polymer in which it is contained, and by the suitable method for producing the powder, achieving the present invention.

### (Electro conductive tin oxide powder)

It is mainly characterized the electro conductive tin oxide powder of the present invention having an excellent deagglomeration ability to easily break agglomerated state to an extent reach to a monodispersed state, wherein the electro conductive tin oxide powder which is characterized in that having a deagglomeration ability represented by a [D₅₀(I) /D₅₀(II)] ratio of 10.0 or more (D₅₀(I) : median particle size before dispersion treatment by a paint shaker, D₅₀(II): median particle size after dispersion treatment by a paint shaker) and which is free from dopant. And it is also by being free of dopant, e.g., antimony. The latter characteristic brings advantages of being free of problems associated with coloration or toxicity.

Moreover, the electro conductive tin oxide powder of the present invention has excellent deagglomeration ability, easilybreaking the agglomerated particles by a simple physical dispersion treatment to an extent close to a monodispersed state, even when the as-produced powder contains agglomerated particles. This property is evaluated in this invention by use of a paint shaker. The evaluation procedure is described in detail later in Examples. The powder of the present invention has the [D₅₀ (I) /D₅₀(II)] ratio of 10. 0 or more. This characteristic determines whether a powder can be easily dispersed in an organic solvent or the like which constitutes a paint. An electro conductive tin oxide powder is found to have sharply improved dispersibility in a paint when it has the ratio of 10.0 or more.

Common metallic and metal oxide particles, not limited to those of the electro conductive tin oxide powder of the present invention, tend to be produced in a state of secondary particles, i.e., primary particles agglomerating with each other, as they become finer. Therefore, the particle size represented by [D₅₀(I)], determined from a particle size distribution measured by a laser diffraction/scattering method, means that of secondary particles. In general, a powder composed of notably agglomerated particles has an insufficient dispersibility in a paint, and a coated film of such a paint tends to show large variations in film density and high surface resistance.

Concerning dispersibility of powder in paints, a powder composed of excessively fine particles, i.e., having excessively high surface energy, is no longer highly dispersible but sparingly dispersible, by which is meant that an electro conductive tin oxide powder, which is composed of fine primary particles in an as-produced state, will no longer be highly dispersible when its secondary particles are dispersion-treated to an extent excessively close to a monodispersed state.

In consideration of the above, the inventors of the present invention have found that an electro conductive tin oxide powder is stably kept highly dispersible in a paint when it has the [D₅₀(I)/D₅₀(II)] ratio of 10.0 or more, even when it is composed of fine particles. The D₅₀ (I) value is preferably 3.0 µm or less. A powder having the D₅₀(I) value above 3.0 µm may be difficult to be dispersion-treated smoothly, increasing production load and deteriorating productivity. It is more preferably 2.5 µm or less. Such a fine powder can be smoothly dispersion-treated when dispersion conditions, e.g., dispersion time, are kept essentially constant.

The D₅₀(II) value is preferably 0.20 µm or less. That a powder has the D₅₀(II) value above 0.20 µm will mean that it is composed of coarse primary particles, or not satisfactorily dispersion-treated. An electro conductive tin oxide powder settles fast in a paint, needing frequent stirring to forcibly disperse the particles. Moreover, it gives a coated film having notably roughened surface after it is calcined or solidified. The D₅₀(II) value is more preferably 0.12 µm or less, to assure smoothness of the coating film surface and reduce Haze value to a desired level. The electro conductive tin oxide powder is preferably finer so long as it is kept highly dispersible in a paint. The method of the present invention, described later in detail, can efficiently produce the electro conductive tin oxide powder satisfying the particle size in the above range.

The lower [D₅₀(I)] and [D₅₀(II)] limits are not mentioned in this specification. The electro conductive tin oxide powder of the present invention is based on the premise that it has a primary particle size of about 0.01 µm to 0.10 µm. The particle size ratio described above is a generally applicable concept irrespective of primary particle size so long as it is within the above range.

The electro conductive tin oxide powder of the present invention generally has a specific surface area in the range of 1 m²/g to 300 m²/g, preferably in the range of 5 m²/g to 200 m²/g, more preferably in the range of 10 m²/g to 100 m²/g. It can be well dispersible in a resin or the like while keeping an adequate viscosity when it has a specific surface area in the above range. Moreover, it generally has a volumetric resistivity of below 100 Ω·cm, preferably below 50 Ω·cm. It can keep a high electro conductivity when it has a volumetric resistivity in the above range.

The coating film of a paint in which the electro conductive tin oxide powder described above is contained can simultaneously satisfy a Haze value of 5% or less as a measure of surface transparency and a stably low surface resistance of 10¹⁰ Ω/□ or less. Moreover, the coating film can simultaneously satisfy a Haze value of 5% or less and a stably low surface resistance of 10⁸ Ω/□ or less by use of the electro conductive tin oxide powder which is fine particles having high dispersibility in a paint produced by the method of the present invention, described later.

### (Method for producing electro conductive tin oxide powder)

The method for suitably producing the electro conductive tin oxide powder of the present invention basically
characterized in that steps for production are, adding a sodium stannate solution slowly into an aqueous acid solution till the solution pH goes down to 5 or under; followed by rinsing, followed by filtering and drying the resulting slurry and milling of the resulting dry powder and calcining of the milled powder in a non-oxidizing atmosphere. The method adopts incorporation of a sodium stannate solution in an aqueous acid solution to reduce quantity of tin coming into contact with the aqueous acid solution, which brings various advantages, e.g., easier control of tin oxide particle growth rate, controlled agglomeration of tin oxide particles because massive evolution of the particles at a stroke is prevented, excellent deagglomeration ability because the particles will not agglomerate with each other firmly, even when the agglomeration occurs, and a sharp particle size distribution.

The aqueous acid solution useful for the present invention can be selected from one of an aqueous sulfuric acid solution, aqueous hydrochloric acid solution, aqueous nitric acid solution, which can neutralize an aqueous sodium stannate solution. They may be used either individually or in combination. Of these, sulfuric and hydrochloric acids are more preferable, viewed fromprocess stability, waste solution treatment load and cost.

The method of the present invention conducts the neutralization step while slowly adding a sodium stannate solution to an aqueous acid solution to keep pH of the reaction system at 5 or less when the addition is completed, preferably 2 to 4, more preferably 2 to 3, because the particles tend to agglomerate with each other in a neutral to alkaline region. The solution is preferably added at a rate to complete the addition in 5 to 180 minutes. An electro conductive tin oxide powder of excellent deagglomeration ability may not be produced when the addition is completed in less than 5 minutes. At a rate to complete the addition for a period exceeding 180 minutes, on the other hand, productivity deteriorates notably while the deagglomeration ability is little improved. At a pH level above 5 when the addition is completed, an electro conductive tin oxide powder may be insufficiently dispersible in a paint. It is preferable that the aqueous acid solution generally contains the acid component at 0.02 N to 3.00 N and sodium stannate concentration is in the range from 10 g/L to 500 g/L. An electro conductive tin oxide powder tends to be more amenable to changed process conditions, e.g., liquid temperature and pH, under the conditions beyond the above ranges.

Neutralization reaction temperature, or solution temperature, is preferably 30°C to 90°C. At below 30°C, the reaction will proceed too slowly to satisfy industrial productivity. At above 90°C, on the other hand, the reaction will proceed too rapidly and tend to cause product quality variations. Moreover, the powder may not maintain good deagglomeration ability because the particles will agglomerate with each other excessively, unless neutralization temperature is kept within a range from 30°C to 90°C. Neutralization temperature is more preferably 50°C to 80°C, in consideration of stability of the neutralization process, to minimize product quality variations.

The resulting slurry is washed by repulping, filtered and dried, and the dried powder is milled by a mill.

The milled powder is then calcined in a non-oxidative atmosphere, e.g., nitrogen, hydrogen-containing nitrogen or argon atmosphere, of which a hydrogen-containing nitrogen atmosphere is more preferable, because of its inexpensiveness. It contains hydrogen normally at 0.1% to 10% by volume, preferably 1% to 3% by volume. The atmosphere containing hydrogen at a concentration in the above range is preferable, because it prevents reduction of tin oxide into the metallic state and facilitates to create oxygen deficiency.

Calcination temperature is preferably 200°C to 1200°C, more preferably 300°C to 800°C, and calcination time is preferably 5 to 120 minutes, more preferably 15 to 60 minutes. These calcination conditions are preferable viewed from efficient creation of an oxygen-deficient atmosphere without sintering tin oxide. The conditions, cited as the more preferable ones, assure stable process for creating an oxygen-deficient atmosphere.

### (Paint containing electro conductive tin oxide powder)

The electro conductive tin oxide powder of the present invention can provide paper, plastic, rubber, resin, paint and so forth with electro conductivity, when incorporated therein. In particular, when incorporated in a paint, it can exhibit advantages of dispersibility in the paint and transparency of the coating film of the paint. The method of the present invention can stably produce the electro conductive tin oxide powder on an industrial scale.

### Advantages of the Invention

The electro conductive tin oxide powder of the present invention provides a polymer or the like with high electro conductivity, is highly dispersible in and highly transparent to paints, and contains no dopant, e.g., antimony, to bring advantages of being free of dopant-caused problems associated with coloration or toxicity. The method of the present invention can stably produce the electro conductive tin oxide powder on an industrial scale.

### Best Mode for Carrying Out the Invention

The present invention will be described in detail with Examples and Comparative Examples as shown below.

### Example 1

To finish reaction, 250 g/L sodium stannate solution kept at 25°C was slowly added, it took 60 minutes, to an 2.5 L aqueous solution of sulfuric acid with concentration of 3% till solution pH goes down to 2.5, keeping solution temperature (reaction temperature) at 80°C.

The resulting slurry was rinsed by hot water in re-pulping method, and then filtrated with suction to get the cake, and then it was kept for 15 hours at 150°C for drying. The dried cake was milled by a force mill and then calcined in a flow of nitrogen gas containing hydrogen at 2% by volume at 450°C for 90 minutes, to prepare tin oxide powder.

The tin oxide powder thus prepared was examined for specific surface area, volumetric resistivity, particle size D₅₀ before and after the dispersion treatment, dispersion ratio and properties of conductive film (surface resistance and Haze value) by the following procedures. The results are shown in Table 1.

(Specific surface are) : specific surface area in B.E.T. method is examined by Monosorb made by Yuasa Ionics Co., Ltd. (Volumetric resistivity) : the sample powder is first pressed at 500 kg-f/cm² by a powder resistance analyzer system MCP-PD41 made by Mitsubishi Chemical Corporation, and then volumetric resistivity was examined by Loresta-AP made by Mitsubishi Chemical Corporation. ([D₅₀(I)]:Particle size before dispersion treatment): The powder sample 0.1 g was mixed with 90 mL of pure water in a 200 cc sample container (the solution pH shows 2 to 3, due to the component eluted out of the powder) and then pH was adjusted at 6.8 with NH₄OH. And then dispersion of the powder was carried out for 10 minutes by an ultrasonic dispersing machine US-300T made by Nippon Seiki Co., Ltd. toprepare sample slurry. The particle size was examined by a laser diffraction/scattering particle size analyzer Microtrack UPA made by Nikkiso Co., Ltd...
([D₅₀(II)] : Particle size after dispersion treatment): The powder sample 2.5 g was mixed with 50 g of pure water in a 100 ml glass container and then pH was adjusted at 6.8 with NH₄OH. After those zirconia bees with diameter 0.3mm 100g was added. And then dispersion was carried out for 60 minutes by a paint shaker to prepare sample slurry. The particle size D₅₀ in the slurrywas examined by a laser diffraction/scattering particle size analyzer Microtrack UPA made by Nikkiso Co., Ltd.
(Surface resistance) : The sample powder was blended with an acrylic resin (LR167 made by Mitsubishi Rayon Co., Ltd.) to be a solid content of 70% by weight. Then dispersion was carried out by a paint shaker for 1 hour to prepare conductive paint. The conductive paint was coated on a PET film by a bar coater and dried to form 1 µm thick conductive film. Surface resistance of the conductive film was examined by Loresta HP made by Mitsubishi Chemical Corporation.
(Haze value): The P.E.T. film covered with conductive film described above was examined by a Haze meter NDH-1001DP made by Nippon Denshoku Industries Co., Ltd.

### Example 2

The tin oxide powder was prepared in the same manner as described in Example 1, with deference in reaction temperature, at 60°C. Specific surface area, volumetric resistivity, particle size D₅₀ before and after the dispersion treatment and dispersion ratio for the tin oxide powder itself and properties (surface resistance and Haze value) on conductive film were examined in the same manner with Example 1. The results are shown in Table 1.

### Example 3

The tin oxide powder was prepared in the same manner as described in Example 1, with deference in sulfuric acid concentration 4 % in aqueous solution and the temperature 50 °C for sodium stannate solution. Specific surface area, volumetric resistivity, particle size D₅₀ before and after the dispersion treatment and dispersion ratio for the tin oxide powder itself and properties (surface resistance and Haze value) on conductive film were examined in the same manner with Example 1. The results are shown in Table 1.

### Example 4

The tin oxide powder was prepared in the same manner as described in Example 1, with deference in sulfuric acid concentration 2 % in aqueous solution and the temperature 60 °C for sodium stannate solution. Specific surface area, volumetric resistivity, particle size D₅₀ before and after the dispersion treatment and dispersion ratio for the tin oxide powder itself and properties (surface resistance and Haze value) on conductive film were examined in the same manner with Example 1. The results are shown in Table 1.

### Example 5

The tin oxide powder was prepared in the same manner as described in Example 1, with deference in the temperature 50°C for sodium stannate solution. Specific surface area, volumetric resistivity, particle size D₅₀ before and after the dispersion treatment and dispersion ratio for the tin oxide powder itself and properties (surface resistance and Haze value) on conductive film were examined in the same manner with Example 1. The results are shown in Table 1.

### Example 6

The tin oxide powder was prepared in the same manner as described in Example 1, with deference in sulfuric acid concentration 2 % in aqueous solution and the temperature 80 °C for sodium stannate solution. Specific surface area, volumetric resistivity, particle size D₅₀ before and after the dispersion treatment and dispersion ratio for the tin oxide powder itself and properties (surface resistance and Haze value) on conductive film were examined in the same manner with Example 1. The results are shown in Table 1.

### Comparative Example 1

576 g of a sodium stannate containing tin at 41% by weight was added to 3.5 L of water and dissolved the sodium stannate in water. Dilute sulfuric acid solution with concentration of 20% was added through 98 minutes to the solution to neutralize a pH level of 2.5. The resulting slurry was rinsed with hot water, and then filtrated with suction to get the cake.

The cake was kept at 150°C for 15 hours for drying. The dried cake was milled by an atomizer and then calcined in a flow of nitrogen gas containing hydrogen at 2% by volume at 700°C for 90 minutes, to prepare the tin oxide powder.

Specific surface area, volumetric resistivity, particle size D₅₀ before and after the dispersion treatment and dispersion ratio for the tin oxide powder itself and properties (surface resistance and Haze value) on conductive film were examined in the same manner with Example 1. The results are shown in Table 1.

### Comparative Example 2

The tin oxide powder was prepared in the same manner as described in Comparative Example 1, replacing 576 g of sodium stannate to 518 g of tin tetrachloride and the solution used for neutralization to a pH of 3.0 was an aqueous sodiumhydroxide solution instead of dilute sulfuric acid solution with a concentration of 20%.

Specific surface area, volumetric resistivity, particle size D₅₀ before and after the dispersion treatment and dispersion ratio for the tin oxide powder itself and properties (surface resistance and Haze value) on conductive film were examined in the same manner with Example 1. The results are shown in Table 1.

### Comparative Example 3

The tin oxide powder was prepared in the same manner as described in Comparative Example 1, with difference in the finishing pH of the solution neutralized to be 4.0 and the calcining temperature of dried cake at 500°C.

Specific surface area, volumetric resistivity, particle size D₅₀ before and after the dispersion treatment and dispersion ratio for the tin oxide powder itself and properties (surface resistance and Haze value) on conductive film were examined in the same manner with Example 1. The results are shown in Table 1.

### Comparative Example 4

In Comparative Example 4, 3170 g of a SnCl₄ solution with concentration of 60 % by weight (1100 g as SnO₂) was blended with 1800 g of water to prepare 3.6 L of the stannic salt solution. Beside, 5 L of 25% ammonia water was mixed with 5 L of water to prepare 10 L of a solution for neutralization. These solutions were sent to bottom of a reactor tank by a metric pump in about 4 minutes with stirring at high speed rotation, 6000 rpm. In such a condition, the stannic salt solution was mixed with the neutralization solution and they reacted almost simultaneously. While the reaction, pH was stably finished at 5. The reaction was carried out at 60 °C to 80 °C and took about 15 minutes. The resulting slurry was discharged from the upper part of the tank continuously, and then filtrated, followed by rinsing and drying. After drying, it is calcined at 450°C for 2 hours in a flow of N₂ gas (300 mL/minute) in a horizontal, annular furnace, to prepare the superfine powder of electro conductive tin dioxide.

Specific surface area, volumetric resistivity, particle size D₅₀ before and after the dispersion treatment and dispersion ratio for the tin oxide powder itself and properties (surface resistance and Haze value) on conductive film were examined in the same manner with Example 1. The results are shown in Table 1.

**[Table 1]**

| Examples and Comparative Examples | Concentration of aqueous sulfuric acid solution (%) | Temperature of sodium stannate solution (°C) | Reaction temperature (°C) | Specific surface area (m²/g) | Volumetric resistance (Ω·cm) | Particle size | | | Coating film | |
|---|---|---|---|---|---|---|---|---|---|---|
| | | | | | | D₅₀ (I) | D₅₀ (II) | D₅₀ (I)/ D₅₀ (II) | Surface resistance (Ω/□) | Haze valu e (%) |
| | | | | | | (µm) | | | | |
| Example 1 | 3 | 25 | 80 | 59 | 4.6×10¹ | 2.4 | 0.09 | 26.7 | 9.2×10⁶ | 4.9 |
| Example 2 | 3 | 25 | 60 | 58 | 4.2×10¹ | 2.3 | 0.08 | 28.8 | 5.9×10⁶ | 3.1 |
| Example 3 | 4 | 50 | 80 | 60 | 1.2×10¹ | 2.4 | 0.07 | 34.3 | 5.9×10⁶ | 3.2 |
| Example 4 | 2 | 60 | 80 | 60 | 2.8×10¹ | 2.0 | 0.07 | 28.6 | 9.0×10⁶ | 1.5 |
| Example 5 | 3 | 50 | 80 | 56 | 4.9×10¹ | 1.6 | 0.07 | 22.9 | 8.4×10⁶ | 2.9 |
| Example 6 | 2 | 80 | 80 | 56 | 2.0×10¹ | 2.3 | 0.06 | 38.3 | 2.4×10⁷ | 0.9 |
| Comparative Example 1 | | | | 53 | 2.3×10¹ | 0.8 | 0.31 | 2.6 | 1.5×10⁸ | 26.4 |
| Comparative Example 2 | | | | 57 | 3.5×10¹ | 1.3 | 0.42 | 3.1 | 7.4×10⁸ | 45.8 |
| Comparative Example 3 | | | | 59 | 8.7×10¹ | 2.2 | 0.38 | 5.8 | 5.6×10⁸ | 36.3 |
| Comparative Example 4 | | | | 26 | 3.3×10¹ | 0.7 | 0.31 | 2.3 | 3.8×10⁷ | 9.8 |

First, it is found in Table 1 that particle size of the powders prepared in Comparative Examples 1 to 4 has a smaller particle size D₅₀ (I) before dispersion treatment than each of the powders prepared in Examples 1 to 6. It means that the particles prepared in Comparative Examples have lower extent in agglomeration. However, each of the tin oxide powders prepared in Examples 1 to 6 has a smaller particle size in D₅₀ (II) after dispersion treatment than those prepared in Comparative Examples 1 to 4, and dispersion ratio is higher. It is thus demonstrated that even the electro conductive tin oxide powder of the present invention is agglomerating with each other to a high extent in the as-prepared state, it exhibits a higher deagglomeration ability than a conventional powder when subjected to a stirring or the like with slight physical load corresponding to representing a dispersion treatment for blending it in a paint. As a result, when the electro conductive tin oxide powder of the invention is used for production of a paint, it is highly dispersible in the paint, and conductive film formed with the paint show low surface resistance and low Haze value.

### Industrial Applicability

The electro conductive tin oxide powder and method for producing the same, both of the present invention, are suitably applicable to various applications which require electro conductivity. In particular for application in conductive paints which require both electro conductivity and dispersion ability for conductive powder with excellent transparency on a conductive film.

## Claims

1. An electro conductive tin oxide powder having an excellent deagglomeration ability to easily break agglomerated state to an extent reach to a monodispersed state, wherein the electro conductive tin oxide powder which is **characterized in that** having a deagglomeration ability represented by a [D₅₀(I) /D₅₀(II)] ratio of 10.0 or more (D₅₀(I) : median particle size before dispersion treatment by a paint shaker, D₅₀(II) : median particle size after dispersion treatment by a paint shaker) and which is free from dopant.

2. The electro conductive tin oxide powder according to claim 1, wherein the D₅₀ (I) is 3.0 µm or less.

3. The electro conductive tin oxide powder according to claim 1, wherein the D₅₀(II) is 0.20 µm or less.

4. The electro conductive tin oxide powder according to claim 1, wherein the conductive film formed by the paint which is prepared with the electro conductive tin oxide powder shows Haze value of 5% or less and surface resistance of 10¹⁰ Ω/□ or less.

5. A method for producing an electro conductive tin oxide powder which is **characterized in that** steps for production are, adding a sodium stannate solution slowly into an aqueous acid solution till the solution pH goes down to 5 or under; followed by rinsing, followed by filtering and drying the resulting slurry and milling of the resulting dry powder and calcining of the milled powder in a non-oxidizing atmosphere.

6. The method for producing an electro conductive tin oxide powder according to claim 5, wherein the aqueous acid solution is one of an aqueous sulfuric acid solution, aqueous hydrochloric acid solution, aqueous nitric acid solution, or a mixture of thereof.

7. The method for producing an electro conductive tin oxide powder according to claim 5, wherein the finishing pH is 4 or under.

8. The method for producing an electro conductive tin oxide powder according to claim 5, wherein an acid concentration in the aqueous acid solution is in the range from 0.02 N to 3.00 N and sodium stannate concentration is in the range from 10 g/L to 500 g/L.

9. The method for producing an electro conductive tin oxide powder according to claim 5, wherein the reaction temperature is kept at 30°C to 90°C.

10. The method for producing an electro conductive tin oxide powder according to claim 5, wherein the non-oxidizing atmosphere is achieved by nitrogen and the calcination temperature is in the range from 200°C to 1200°C.

11. A paint which is **characterized in that** electro conductive tin oxide powder according to claim 1 is contained.

12. A paint which is **characterized in that** electro conductive tin oxide powder according to claim 2 is contained.

13. A paint which is **characterized in that** electro conductive tin oxide powder according to claim 3 is contained.

14. A paint which is **characterized in that** electro conductive tin oxide powder according to claim 4 is contained.
